(19) Europäisches Patentamt
European Patent Office
Office européen des brevets

(11) **EP 3 348 138 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **17150917.7**

(22) Anmeldetag: **11.01.2017**

(51) Internationale Patentklassifikation (IPC):
**A01G 25/16** *(2006.01)*

(52) Gemeinsame Patentklassifikation (CPC):
**A01G 25/167**

(54) **VERFAHREN UND VORRICHTUNG ZUR BEWÄSSERUNG VON PFLANZEN**

METHOD AND DEVICE FOR WATERING PLANTS

PROCÉDÉ ET DISPOSITIF D'ARROSAGE DE PLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.07.2018 Patentblatt 2018/29**

(73) Patentinhaber: **Technische Hochschule Mittelhessen**
**35390 Giessen (DE)**

(72) Erfinder:
• **Weigand, Harald**
**86316 Friedberg (DE)**
• **Gokorsch, Stephanie**
**35444 Biebertal (DE)**
• **Wessel-Bothe, Stefan**
**53639 Königswinter (DE)**

(74) Vertreter: **Stumpf, Peter**
**c/o TransMIT GmbH**
**Kerkrader Strasse 3**
**35394 Gießen (DE)**

(56) Entgegenhaltungen:
WO-A1-00/37935     WO-A1-2015/097699
WO-A2-2009/024962     CA-A1- 2 446 843
US-A- 4 040 436

**Beschreibung**

Die vorliegende Erfindung betrifft ein Verfahren sowie eine Vorrichtung zur tensionsgesteuerten Bewässerung von Pflanzen.

**Stand der Technik**

Pflanzen reagieren auf unzureichendes Wasserangebot mit der Schließung der Spaltöffnungen (Stomata), um den Wasserverlust durch Verdunstung zu reduzieren. Dadurch wird jedoch auch die Aufnahme von $CO_2$ aus der Atmosphäre unterbunden, und es kann keine Assimilation mehr stattfinden. Die Pflanze verwelkt.

Da die Transpiration von Pflanzen durch eine Vielzahl von Faktoren mitbestimmt wird, wie zum Beispiel dem Entwicklungszustand der Pflanze, der Nährstoffversorgung, der Luftpermeabilität des Bodens u. dgl., ist es nicht möglich, eine optimale Wasserversorgung durch eine vorgegebene konstante Bewässerungsrate zu erzielen. Neben der Transpiration durch die Pflanzen stellt natürlich auch die direkte Verdunstung von Wasser aus dem Boden in die Atmosphäre einen wesentlichen Einflußfaktor auf die Wasserversorgung der Pflanze dar.

Die Fähigkeit von Pflanzenwurzeln, Wasser aus dem Boden aufzunehmen und an die Atmosphäre abzugeben, wird durch die als Unterdruck wirksamen Kapillarkräfte des Bodens (Tension) limitiert. Diese Kapillarkräfte nehmen mit wachsender Austrocknung des Bodens zu, d.h. der Unterdruck, gegen den die Pflanze das Wasser aus dem Boden aufnehmen muss, steigt. Der Grund dafür ist der mit zunehmender Entwässerung des Bodens abnehmende Durchmesser der wasserführenden Poren im Boden. Dieses Phänomen tritt nicht nur in natürlichen Bodenstrukturen auf, in denen der Porendurchmesser je nach Wassergehalt variieren kann, sondern auch in künstlichen Substraten mit unveränderlichen Porenweiten. Hier resultiert dieses Phänomen daraus, dass Porenstrukturen üblicherweise einen im wesentlichen fraktalen Aufbau aufweisen, d.h. von großen Poren zweigen kleinere Seitenporen ab, von denen wiederum noch kleinere Seitenporen abzweigen usw., bis hinab in molekulare Größenordnungen. Ist das Substrat mit Wasser gesättigt, befindet sich die Wasseroberfläche in den großen Poren, so dass deren Durchmesser die aktuell herrschenden Kapillarkräfte bestimmt. Wird das Wasser aus dem Porensystem herausgezogen, trocknen als erstes die großen Poren aus, so dass die Wasseroberfläche in kleinere Poren verlagert wird, wodurch nun deren Durchmesser die aktuell herrschenden Kapillarkräfte bestimmen. Mit weiter abnehmendem Wassergehalt des Substrates setzt sich der Prozeß fort, so dass die Kapillarkräfte von den Durchmessern immer kleinerer Poren bestimmt werden, ohne dass dafür eine reale Änderung von Pordendurchmessern erfolgen muss.

Pflanzen brauchen zur Aufrechterhaltung der Wurzelatmung ein ausgewogenes Verhältnis zwischen Wasser- und luftgefüllten Poren. Dies ist darin begründet, dass der Gasaustausch unter wassergesättigten Bedingungen durch Diffusion erschwert ist. Damit ist der Biomassezuwachs nicht nur durch die Wasserversorgung sondern auch durch den Lufthaushalt des Bodens limitiert. Je nach Bodenart bzw. Art des Substrates, in dem die Pflanze wurzelt, findet die bestmögliche Assimilation, also der bestmögliche Biomassezuwachs, bei unterschiedlichen Kapillarkräften statt, je nach Art des Bodens bzw. des durchwurzelbaren Substrates. Als durchwurzelbare Substrate werden im Rahmen der vorliegenden Offenbarung jegliche Bodenarten verstanden, unabhängig davon, ob sie natürlich gewachsen oder künstlich aufgeschüttet sind, sowie weiterhin Aufschüttungen künstlicher Substrate, beispielsweise Tongranulate, die im Stand der Technik dazu verwendet werden, Pflanzen darin wachsen zu lassen.

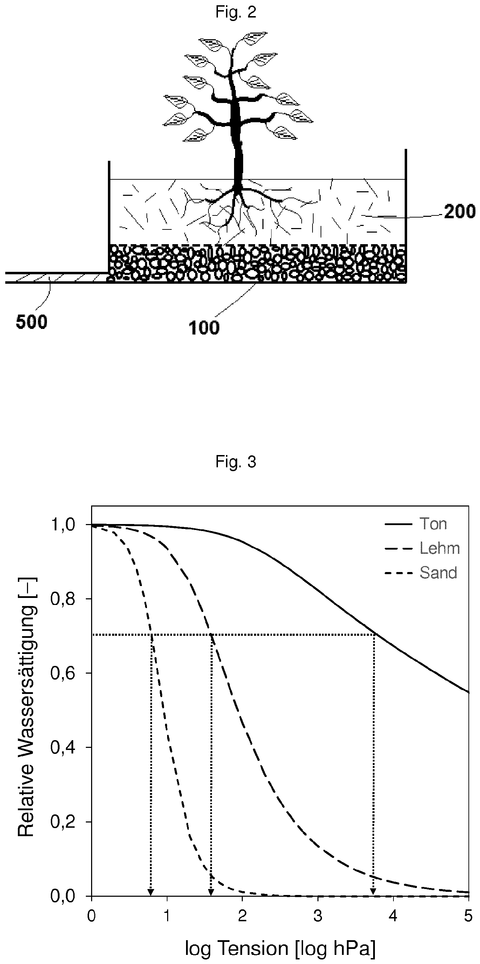

Der Zusammenhang zwischen Luft- und Wasserhaushalt in durchwurzelbaren Substraten wird bodenphysikalisch anhand der Retentionskurve (auch pF-WG-Beziehung genannt) beschrieben. Diese ist eine von der Porengrößenverteilung abhängige Materialfunktion, d.h. eine Eigenschaft des jeweiligen durchwurzelbaren Substrates und gibt sozusagen die Rückhaltefähigkeit des Materials für Wasser wider. Fig. 3 gibt beispielhaft die anhand der UNSONDA Database (US Geological Survey) parametrisierten Retentionskurven für die Bodenarten Ton, Lehm und Sand wieder. Es wird deutlich, dass für eine 70%ige Wassersättigung im Ton eine Tension von ca. 6000 hPa vorherrschen muss, während die entsprechende Saugspannung bei Lehm bzw. Sand bei ca. 45 hPa bzw. 6 hPa liegt. Eine pflanzenphysiologisch optimierte Wasserversorgung kann somit nur mittels einer flexiblen Saugspannungsregulierung gelingen. Keine der im Stand der Technik bekannten Vorrichtungen oder Verfahren ermöglicht das.

Üblicherweise wird der Wassernachschub für die Pflanzen durch Beregnung bzw. Gießen realisiert. Die Durchführung dieser Verfahren erfolgt nach Erfahrung und insbesondere nicht kontinuierlich, sondern erst dann, wenn der Mangel bereits deutlich erkennbar ist, d.h. sich die Pflanzen bereits weit unterhalb des Assimilationsmaximums befinden.

Es sind im Stand der Technik auch Bewässerungssysteme bekannt, die eine prinzipiell gleichmäßige Wasserzufuhr teilweise sicherstellen. Keines der bekannten Systeme berücksichtigt jedoch den variablen Wasserbedarf der Pflanzen. Bei keinem der bekannten Systeme erfolgt eine für die Aufrechterhaltung einer optimalen Wasserversorgung von Pflanzen erforderliche Berücksichtigung der aktuellen Tension.

Bekannt ist z.B. aus der DE 299 12 508 U1 ein Bewässerungssystem aus unterirdisch verlegten Schläuchen mit ventilartigen Austrittsöffnungen, die an ein Wasserleitungssystem angeschlossen sind, und aus denen Wasser mengenmäßig derart in geringer Konzentration austreten kann, dass sich ein vorgegebenes praktisch gleichmäßiges Feuchteprofil annähernd konstanter vertikaler Dicke einstellt, dessen vertikale Position im wesentlichen zeitlich unverändert bleibt. Dieses System ist mit den ventilartigen Austrittsöffnungen sehr komplex aufgebaut und dadurch störanfällig. Zudem erfolgt keinerlei Regelung in Abhängigkeit von der vorherrschenden Tension im Boden und damit der jeweils aktuellen Assimilation der Pflanzen. Zwar ist vorgesehen, die Dicke der Feuchtezone durch die Variation der Wasserzufuhr im Bedarfsfalle zu ändern, jedoch muss dies manuell immer wieder von neuem vorgenommen werden. Insgesamt wird durch die im wesentlichen unveränderliche vertikale Position je nach erfolgter Einstellung jederzeit die gleiche einmal eingestellte Menge an Wasser freigesetzt, was zu enormen Verbrauchskosten führen kann. Die Abgabe von Wasser durch das Versorgungssystem erfolgt in vorgegebenen kurzen Zeitabständen wodurch keine wirklich kontinuierliche Bewässerung entsprechend dem aktuellen Bedürfnis der Pflanzen je nach Wachstumsphase erreicht wird.

Die in DE 299 12 508 U1 offenbarte Vorrichtung sieht die Messung der Bodenfeuchte vor. Die Kapillarspannung des Bodens wird hierbei durch ein elektrisches Kapazitätsmeßgerät ermittelt, unter Verwendung eines Normbodens. Dieses Verfahren ist äußerst arbeitsaufwendig und kostspielig. Zudem müssen diese Messungen an verschiedenen Stellen stattfinden und sie werden lediglich sporadisch manuell durchgeführt. Eine Regelung der Wasserzufuhr in Abhängigkeit von der gerade herrschenden Tension wird dadurch nicht erreicht. Bei dem Verfahren gemäß der DE 299 12 508 U1 wird die Einbringung des Wassers in das Substrat mit Hilfe des im Wasserversorgungssystem herrschenden Überdrucks realisiert, d.h. es wird dem Boden eine Kapillarspannung/Tension/Feuchte aufgezwungen, die im allgemeinen nicht dem aktuellen Bedarf der Pflanzen entspricht. Die Vorrichtung der DE 299 12 508 U1 ist ausschließlich zur Verwendung im Freiland vorgesehen.

AT 513373 B1 offenbart eine Vorrichtung zur Pflanzenbewässerung, bestehend aus einer Wanne enthaltend Wasser, einem Träger mit darauf befindlicher kapillarer Matte und flüssigkeitsdurchlässiger Folie sowie vom Träger umschlossenen kapillaren Verbindungselementen, durch die die Flüssigkeit aus der Wanne bis zur Stellfläche auf der Folie kapillar aufsteigen kann.

Diese Vorrichtung weist den gravierenden Nachteil auf, dass der Transport des Wassers bis an die Pflanzenwurzeln über mehrere Phasengrenzen hinweg erfolgen muss und daher sehr ineffizient ist. Als Phasengrenze wird in diesem Zusammenhang jede makroskopische Kontaktfläche zwischen kapillar oder nichtkapillar wasserleitenden Materialien unterschiedlicher Zusammensetzung oder Konsistenz angesehen. Phasengrenzen in diesem Sinne sind z. B. die Kontaktfläche zwischen kapillarem Verbindungselement und der kapillaren Matte, die Kontaktfläche zwischen kapillarer Matte und flüssigkeitsdurchlässiger Folie sowie die Kontaktfläche zwischen flüssigkeitsdurchlässiger Folie und darauf befindlichem Pflanzgefäß. Dem Fachmann ist bekannt, dass der Transport von Flüssigkeiten über derartige Phasengrenzen hinweg sehr viel weniger effektiv ist, als innerhalb der aneinander grenzenden wasserleitenden Materialien. Im vorliegenden Stand der Technik müssen insgesamt mindestens drei für den Flüssigkeitstransport ineffektive Phasengrenzen von dem Flüssigkeitsstrom überwunden werden, bevor die aus der Wanne per Kapillarwirkung entnommene Flüssigkeit den Pflanzenwurzeln zur Verfügung steht.

Zudem erfolgt in dieser aus dem Stand der Technik bekannten Vorrichtung keine Regulierung über die Tension, bzw. den aktuellen Bedarf der Pflanzen, und es findet auch keinerlei Ausgleich der nachlassenden kapillaren Förderung infolge Absinken des Flüssigkeitsspiegels statt. Die Vorrichtung aus AT 513373 B1 ist ausschließlich zur Verwendung in portablen Wannen vorgesehen.

Bekannt ist weiterhin, z. B. aus der DE 297 21 057 U1, eine Einrichtung, die einen Flüssigkeitsstand konstant hält, indem eine Belüftungsöffnung eines Vorratstanks durch eine Wasseroberfläche verschlossen wird, deren Höhe durch eine Ansammlung des dem Tank entnommenen Wassers gebildet wird. Erreicht der äußere Flüssigkeitsspiegel die Belüftungsöffnung, kann das Tankinnere nicht mehr belüftet werden, wodurch der Ausstrom der Flüssigkeit endet und sich ein entsprechender Unterdruck im Tank einstellt. Das Konstanthalten des äußeren Wasserspiegels erfolgt durch Regelung des Unterdruckes in dem Vorratstank. Dieses System weist jedoch den Nachteil auf, dass die Höhe des äußeren Wasserspiegels und damit die Wasserzufuhr nicht in Abhängigkeit von der Tension und damit letztendlich dem aktuellen konkreten Bedarf der Pflanzen für den aktuellen optimalen (d.h. maximal möglichen) Assimilationsgrad geregelt oder gesteuert werden kann. Zudem verlangt diese Vorrichtung aus dem Stand der Technik zwingend eine reale makroskopische Wasseroberfläche, die mit der Belüftungsöffnung in Kontakt steht. Dies erzeugt zwangsläufig Staunässe, die zu einer schlechteren Bodendurchlüftung führt und daher für viele Pflanzen schädlich ist.

Aus der WO 2009/024962 A2 ist auch eine Vorrichtung zur Pflanzenbewässerung bekannt. Keine der im Stand der Technik bekannten Vorrichtungen oder Verfahren zur Bewässerung von Pflanzen ist in der Lage, mit geringem Aufwand eine tensionsgesteuerte oder -geregelte Bewässerung von Pflanzen zur Aufrechterhaltung optimaler Assimilationsbedingungen, d.h. optimaler Wasserversorgung zur Erreichung der maximalen Assimilationsrate, zu ermöglichen.

## Aufgabe

Aufgabe der vorliegenden Erfindung ist es somit, die Wasserversorgung von Pflanzen zu optimieren, indem im Assimilationsmaximum der Pflanze dem Boden im wesentlichen genau diejenige Wassermenge nachgeliefert wird, die ihm durch die Transpiration der Pflanze sowie Verdunstung entzogen wird.

**Lösung der Aufgabe**

Diese Aufgabe wird erfindungsgemäß gelöst durch die kennzeichnenden Merkmale der Vorrichtung gemäß Anspruch 1 sowie des Verfahrens gemäß Anspruch Folgende Begriffsdefinitionen liegen der Beschreibung zugrunde: "Tension": Unter Tension, auch Kapillarspannung oder Saugspannung genannt, wird das Vermögen eines porösen Materials oder einer Materialschüttung bezeichnet, eine Flüssigkeit aufzusaugen. Dies kann gemessen werden, wenn die Flüssigkeit aus einem abgeschlossenen Gefäß angesaugt wird. Der sich dabei im Gleichgewichtsfall einstellende Druck in dem geschlossenen Gefäß ist ein Maß für die Tension/Kapillarspannung. Auf die sich im jeweiligen Substrat einstellende Tension haben zahlreiche Parameter Einfluß, beispielsweise Temperatur, Verdunstung, Flüssigkeitsentnahme durch die Wurzeln (Assimilation/Transpiration), Nachfließen von Flüssigkeit (Wasser) aus Reservoiren, beispielsweise Grundwasser. Als "tensionsgesteuert" wird ein Bewässerungsverfahren bezeichnet, wenn die Wasserzufuhr in Abhängigkeit der Tension erfolgt. Die übliche Maßeinheit der Tension bzw. Kapillarspannung ist der negative dekadische Logarithmus der Saugspannung in cm WS ("pF-Wert", "WS" = Wassersäule).

"Verdunstung": Unter Verdunstung wird derjenige Anteil des Flüssigkeitsverlusts aus einem durchwurzelbaren Substrat in die darin und darüber befindliche Gasphase verstanden, der nicht durch die Pflanze hindurch erfolgt.

"Transpiration": Unter Transpiration wird derjenige Anteil des Flüssigkeitsverlusts aus einem durchwurzelbaren Substrat in die darin und darüber befindliche Gasphase verstanden, der durch die Pflanze hindurch erfolgt; dies geschieht sowohl durch die Spaltöffnungen hindurch als auch - in weitaus geringerem Umfange - über die sonstige Oberfläche der Pflanze.

"Assimilation": Unter Assimilation wird die schrittweise erfolgende Stoffumwandlung körperfremder in körpereigene Stoffe in Pflanzen verstanden. Sie kann nur stattfinden, wenn die Pflanze ausreichend mit Wasser versorgt ist. Für die Durchführung der Assimilation, also die Assimilierung, muss die Pflanze über die Wurzeln Wasser aufnehmen, bis in die Blätter transportieren und dort durch die Spaltöffnungen ausscheiden, d.h. transpirieren. Als "Assimilationsgrad" wird das jeweils aktuell mögliche Ausmaß an Assimilation bezeichnet, das die Pflanze zu dem betreffenden Zeitpunkt betreiben kann. Der Assimilationsgrad ist somit niedrig bei Wassermangel und hoch bei ausreichender Wasserversorgung der Pflanze.

"Wurzelatmung": Pflanzen nehmen über die Wurzeln nicht nur Wasser und darin gelöste Nährstoffe auf, sondern auch in den Bodenporen befindliche Luft. Dies wird als Wurzelatmung bezeichnet.

Weitere vorteilhafte Ausgestaltungen der Vorrichtung bzw. des Verfahrens sowie der Verwendung der Erfindung ergeben sich aus den übrigen Patentansprüchen, der Beschreibung und den anhängenden Figuren. Das nachfolgend offenbarte tensionsgesteuerte Bewässerungssystem löst dieses Problem insbesondere, ohne dass es dazu zwingend einer Messung der Saugspannung bzw. Tension bedarf.

Die erfindungsgemäße tensionsgesteuerte Wasserversorgung von Pflanzen besteht im wesentlichen darin, die Wassernachlieferung nicht über die Zufuhr eines definierten Volumens Wasser pro Zeiteinheit zu bewerkstelligen, sondern darüber, die am unteren Rand eines durchwurzelbaren Substrates wirksamen Kapillarkräfte zeitlich konstant zu halten, und zwar auf einem Wert, der es der in dem Substrat wurzelnden Pflanze gestattet, eine für das jeweilige Wachstumsstadium optimale Assimilationsrate aufrechtzuerhalten.

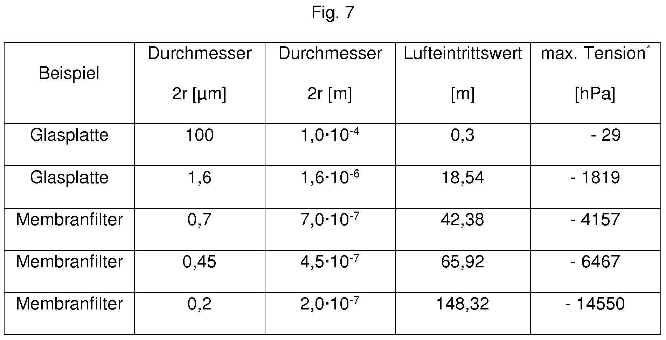

Dies wird erreicht, indem das Substrat auf eine poröse Platte mit einem geeignet hohen Lufteintrittswert platziert wird. Der Lufteintrittswert ist hierbei definiert als derjenige an der Platte angelegte Unterdruck, bei dem die flüssigkeitsgesättigte poröse Platte entwässert. (In Fig. 7 sind berechnete Werte des Lufteintrittswertes für verschiedene Glasplatten und Membranfilter beispielhaft angegeben.) Dieser Druck muss niedriger sein als der angestrebte Unterdruck, d. h. die angestrebte Tension im durchwurzelbaren Substrat. Diese Platte wird mit einem Wasservorrat derart verbunden, dass der am unteren Rand der Substratschüttung anstehende Unterdruck zeitlich konstant ist. Diese zeitliche Konstanz des Unterdrucks bewirkt einen konstanten Potentialgradienten und damit eine im wesentlichen aufwärts gerichtete Wassernachlieferung in den Wurzelraum innerhalb der Substratschüttung in Abhängigkeit vom Wasserverbrauch der Pflanze und dem verdunstungs-/ bzw. versickerungsbedingten Wasserverlust. Dieser Zustand entspricht sozusagen einem Gleichgewicht zwischen dem System Boden-Pflanze-Atmosphäre und einer Grundwasseroberfläche, die trotz der Wasserabgabe an die Atmosphäre nicht absinkt.

Die Verbindung des unteren Randes der Substratschüttung (des durchwurzelbaren Substrates) mit dem Wasservorrat erfolgt über die poröse Platte und mindestens eine Zuleitung vom Vorratsgefäß zur porösen Platte. Der Wasservorrat wird unter Unterdruck gehalten. Der dadurch am unteren Rand der Substratschüttung anliegende Unterdruck (Tension) ist somit zusammengesetzt aus dem Unterdruck, der durch den vertikalen Abstand zwischen poröser Platte und freier Wasseroberfläche, einer sogenannten "hängenden Wassersäule", herrscht, und dem Unterdruck, der im Gasraum oberhalb der Flüssigkeitsoberfläche im Vorratsbehälter herrscht. Die poröse Platte kann aus unterschiedlichsten Materialien bestehen, die im Bereich des Pflanzenanbaus im Freiland, im Gewächshaus und in Pflanzgefä-ßen üblich sind, also z.B. aus Kunststoff, Membranfiltern, gebranntem Ton (Steingut), Glassinter- bzw. Keramiksintermaterialien, Edelstahlsinter- oder Metallegierungs-Sintermaterialien (z.B. Bronze). Derartige poröse Platten gibt es mit Porenweiten bis herab zu ca. 1 $\mu$m. Die Wahl der Platten richtet sich nach deren Wasserleitfähigkeit und der angestrebten Tension.

Durch die Wasseraufnahme der Pflanze aus dem Substrat sinkt das Niveau der Wasseroberfläche in den Poren innerhalb bzw. unterhalb der Substratschüttung und außerhalb des Vorratsbehälters, wodurch die Länge der hängenden Wassersäule zunimmt und der Unterdruck im Vorratsbehälter steigt, d.h. der absolute Druck im Vorratsbehälter sinkt. Durch gegenläufige Nachregulierung des Unterdrucks im Vorratsgefäß, d.h. durch Erhöhung des darin befindlichen absoluten Drucks, wird die insgesamt wirkende Tension konstant gehalten.

Anders ausgedrückt wird durch die Steuerung/Regelung des Unterdrucks im Vorratsgefäß sichergestellt, dass trotz variierender Einflußparameter auf die Tension (Pflanzenassimilation, Verdunstung, Versickerung) diese konstant optimal für die Pflanzen gehalten wird.

Das Verfahren stellt somit ein neues am tatsächlichen Bedarf von Pflanzen orientiertes und von unten nach oben gerichtetes Bewässerungsverfahren dar.

Dem Fachmann ist ohne weiteres ersichtlich, dass es in den Umfang der Erfindung sowie ihrer Äquivalente fällt, dass die Auswahl bzw. Festlegung/Einstellung des Wertes der Tension, der erfindungsgemäß aufrecht zu erhalten ist, anhand unterschiedlichster Parameter erfolgen kann. Erfindungsgemäß verwendbare Parameter für die Einstellung/Auswahl des Zielwertes der Tension sind beispielsweise Temperatur, Jahreszeit, Pflanzenart, aktuelles Wachstumsstadium, Bewuchsdichte, Bodenart, Art des Substrates oder beliebige Kombinationen dieser Parameter. Bezüglich Bodenart sind Beispielwerte in Fig. 3 eingezeichnet, um das grundsätzliche Vorgehen zu verdeutlichen: Um eine Wassersättigung von 70% im durchwurzelbaren Substrat zu erreichen, müssen für die Bodenarten Ton, Lehm und Sand anhand des Unterdruckes im Vorratsgefäß jeweils in etwa folgende Werte für die Saugspannung (Tension) eingestellt werden:

$$\text{Ton:} \quad \log hPa \approx 3{,}55, \text{ d.h. } p \approx 10^{3{,}55} hPa \approx \text{"-" } 3550 \, hPa$$
$$\text{Lehm:} \quad \log hPa \approx 1{,}38, \text{ d.h. } p \approx 10^{1{,}38} hPa \approx \text{"-" } 24 \, hPa$$
$$\text{Sand:} \quad \log hPa \approx 0{,}62, \text{ d.h. } p \approx 10^{0{,}62} hPa \approx \text{"-" } 4 \, hPa$$

Der zur Erreichung dieser Werte der Saugspannung (Kapillarspannung/Tension) jeweils im Vorratsbehälter konstant zu haltende Unterdruck kann unter Umständen von diesen Werten abweichen.

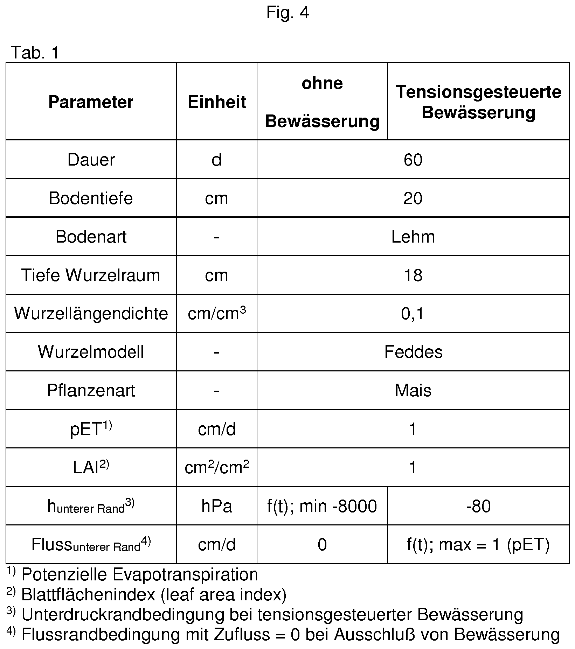

Zur Verdeutlichung der Zusammenhänge wurden zunächst Modellrechnungen zum Boden-Pflanze-Atmosphären Kontinuum durchgeführt, d.h. Simulationen zum Wassertransport im Boden unter dem Einfluß einer Wasserentnahme über Pflanzenwurzeln. Dafür wurde das Softwarepaket HYDRUS 1D verwendet; aus Tab. 1 (Fig. 4) sind die verwendeten Parameter ersichtlich.

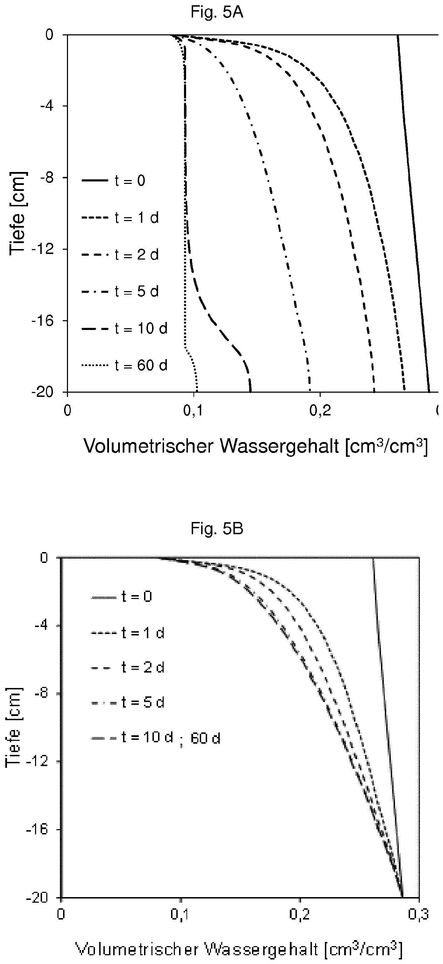

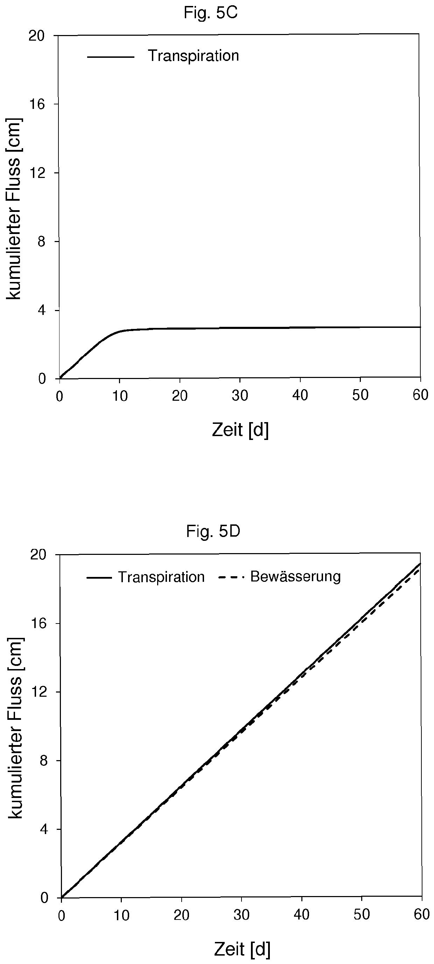

Die Simulationsergebnisse sind in den Figuren 5A bis 5D zusammengefasst. Das unbewässerte System zeigt eine ausgeprägte Austrocknung des Bodens unter dem Einfluß der Pflanzenwurzeln. Innerhalb von 10 Tagen nimmt der Wassergehalt des Wurzelraums (0 - 18 cm) auf ca. 10 Vol.-% ab (Fig. 5A). Die sich bis dahin aufbauende Tension hemmt die Wasseraufnahme durch die Wurzeln, so dass der Transpirationsstrom abflacht. Ab dem Zeitpunkt, ab dem die kumulative Transpiration zeitlich konstant verläuft (Fig. 5C), kommt die Transpiration vollständig zum Erliegen und die Welke setzt ein.

Die tensionsgesteuerte Bewässerung bewirkt, dass der Wassergehalt anfänglich zwar abnimmt, sich ab dem fünften Tag jedoch ein konstantes Wassergehaltsprofil einstellt. Aufgrund des Zusammenhangs zwischen Tension und Wassergehalt (pF-WG-Beziehung) bleibt am unteren Rand der Wassergehalt über den gesamten Zeitraum unverändert. Dieser Effekt trägt (aufgrund der vom Wassergehalt abhängigen ungesättigten Wasserleitfähigkeit) dazu bei, dass der Transpirationsstrom über die Wassernachlieferung kompensiert werden kann. Im Unterschied zum unbewässerten Fall weist die kumulierte Transpiration bei tensionsgesteuerter Bewässerung eine konstante Steigung auf (Fig. 5D). Dies bedeutet, dass die Pflanzen eine konstante Transpirations- und damit Assimilationsrate aufrechterhalten, was gewünscht ist.

Parallel zur Transpiration verläuft die Bewässerung (Wasserfluß über den unteren Rand). Dies belegt, dass die Wasserverluste durch Transpiration durch die Nachlieferung im wesentlichen genau kompensiert werden, was mit dem ab dem 5. Tag invarianten Wassergehaltsprofil konsistent ist.

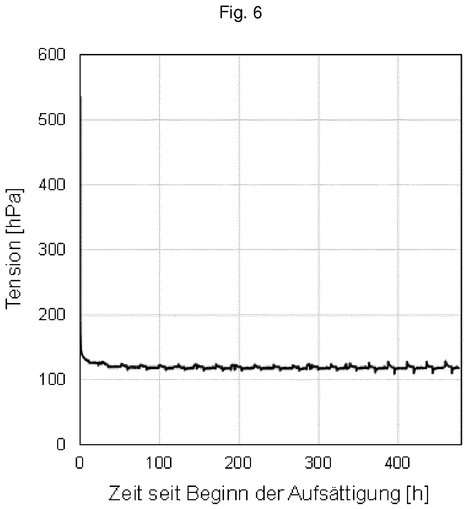

Aufbauend auf den vorstehend beschriebenen Simulationsrechnungen wurden Versuche durchgeführt, die die Wirksamkeit des erfindungsgemäßen Bewässerungsverfahrens belegen. Ausgewählte beispielhafte Ergebnisse sind aus Fig. 6 ersichtlich.

Zusammenfassend läßt sich der Gegenstand der Patentanmeldung, also die tensionsgesteuerte und/oder tensionsgeregelte Vorrichtung zur Bewässerung von Pflanzen, bzw. das entsprechende Verfahren sowie die Verwendung der Vorrichtung/des Verfahrens, wie folgt beschreiben:

Die Erfindung umfasst eine Vorrichtung zur Pflanzenbewässerung **1,** umfassend mindestens eine Struktur zur Verteilung von Flüssigkeit **100** für die Bewässerung eines durchwurzelbaren Substrats **200,** mindestens ein im wesentlichen gasdichtes Vorratsgefäß **300** mit einem Auslauf **600,** geeignet zur Aufnahme eines Flüssigkeitsvorrates **400** sowie mindestens eine verzweigte oder unverzweigte Rohr- und/oder Schlauchverbindung **500** zwischen dem mindestens einen Vorratsgefäß **300** und der mindestens einen Struktur zur Verteilung der Flüssigkeit **100.** Durch die mindestens eine verzweigte oder unverzweigte Rohr- und/oder Schlauchverbindung **500** gelangt die Flüssigkeit **400** aus dem mindestens einen Vorratsgefäß **300** zu der mindestens einen Struktur zur Verteilung von Flüssigkeit **100.** Kennzeichnend ist, dass die mindestens eine Struktur zur Verteilung von Flüssigkeit **100** einen Lufteintrittswert zwischen 1 hPa und 1013 hPa, bevorzugt zwischen 50 hPa und 900 hPa, besonders bevorzugt zwischen 100 hPa und 800 hPa aufweist, und sich in dem Vorratsgefäß **300** ein Drucksensor **1000** befindet, mit dem die Kapillarkräfte des durchwurzelbaren Substrats **200** ermittelt werden. Mit dem Lufteintrittswert hängt der Flüssigkeitsleitwert, bzw. Wasserleitwert der porösen Platte zusammen, so dass aus der Bestimmung des Lufteintrittswertes, also demjenigen Unterdruck, bei dem die mit Wasser gefüllte poröse Platte entwässert, auf den Flüssigkeits- bzw. Wasserleitwert geschlossen werden kann. Dem Fachmann sind die Methoden der Umrechnung bekannt.

Weiterhin umfasst die Erfindung eine Vorrichtung wie vorstehend beschrieben, die sich zusätzlich dadurch auszeichnet, dass sich der Drucksensor **1000** in der Nähe des Auslaufs **600** befindet.

Weiterhin umfasst die Erfindung eine Vorrichtung wie vorstehend beschrieben, die sich zusätzlich dadurch auszeichnet, dass es sich bei der mindestens einen Struktur zur Verteilung von Flüssigkeit **100** in oder an dem durchwurzelbaren Substrat **200** um mindestens eine poröse Platte und/oder mindestens einen perforierten Schlauch und/oder mindestens ein perforiertes Rohr handelt.

Weiterhin umfasst die Erfindung eine Vorrichtung wie vorstehend beschrieben, die sich zusätzlich dadurch auszeichnet, dass sie mindestens eine Zuleitung **700** für die Auffüllung verbrauchter Flüssigkeit **400** aufweist und/oder mindestens eine Ableitung **800** zum Ablaß nicht mehr benötigter Flüssigkeit **(400).** Weiterhin oder zusätzlich umfasst diese Ausführungsvariante mindestens eine Absperrvorrichtung **70** für die Zuleitung **700** und/oder mindestens eine Absperrvorrichtung **80** für die Ableitung **800.** Insbesondere die Möglichkeit, dass die Zuleitung **700** erfindungsgemäß keine eigene Absperrvorrichtung umfasst, ist auch erfindungsgemäß, denn der Anschluß der Vorrichtung über die Zuleitung **700** an ein Wasserversorgungsnetz erfolgt üblicherweise über eine entsprechende Zapfstelle, die ihrerseits ggf. die Aufgabe der Absperrvorrichtung **70** übernehmen kann, da Zapfstellen an Wasserleitungsnetzen bekanntermaßen bereits eine Absperrvorrichtung aufweisen.

Weiterhin umfasst die Erfindung eine Vorrichtung wie vorstehend beschrieben, die sich zusätzlich dadurch auszeichnet, dass sie, erfindungsgemäß, mindestens eine im Vorratsgefäß **300,** ggf. im Gasraum über der Flüssigkeit befindliche, verschließbare Öffnung **900** mit mindestens einer Absperrvorrichtung **90** für die Öffnung **900** aufweist, über die in geeigneter Weise Gasaustausch zwischen dem Inneren des Vorratsgefäßes und der Umgebung im wesentlichen genau dann erfolgt, wenn dies erforderlich ist, um den gewünschten Unterdruck im wesentlichen aufrecht zu erhalten. Da der Gasaustausch zwischen dem Inneren des Vorratsgefäßes und der Umgebung üblicherweise nur von au-ßen nach innen erfolgt, um den wachsenden Unterdruck im Vorratsgefäß **300** infolge des Flüssigkeitsverbrauchs auszugleichen, kann diese Öffnung an beliebiger Stelle, auch unterhalb der Flüssigkeitsoberfläche befindlich sein.

Weiterhin umfasst die Erfindung ein Verfahren zur Pflanzenbewässerung, das sich dadurch auszeichnet, dass die Zufuhr von Flüssigkeit in ein durchwurzelbares Substrat gesteuert oder geregelt wird, indem der Unterdruck in mindestens einem Vorratsgefäß, das mindestens teilweise mit Flüssigkeit befüllbar ist, bei einem Wert im wesentlichen konstant gehalten wird, bei dem sich in dem durchwurzelbaren Substrat infolge mindestens einer hydraulischen Verbindung zwischen dem mindestens einen Vorratsgefäß und dem durchwurzelbaren Substrat eine Kapillarspannung einstellt, die geeignet ist für die Assimilation von Pflanzen und/oder das Keimen von Pflanzensamen, wobei

a) im Falle der Regelung des Unterdruckes die Messung des Unterdruckes mittels eines Sensors **(1000)** erfolgt,
b) im Falle der Steuerung des Unterdruckes die Festlegung des Unterdruckes anhand von Parametern erfolgt, ausgewählt aus der Liste umfassend Art des durchwurzelbaren Substrats **(200),** Temperatur, Datum, Pflanzenart, und
c) sowohl bei Regelung als auch bei Steuerung die Einstellung des Unterdruckes durch wahlweises Betätigen der Absperrvorrichtungen **(70, 80, 90)** erfolgt.

Weiterhin umfasst die Erfindung ein Verfahren wie vorstehend beschrieben, das sich dadurch auszeichnet, dass die für die Durchführung des Verfahrens in Abhängigkeit vom Verbrauch der Flüssigkeit erforderliche Variation des Unterdruckes entweder durch die Variation der Gasmenge im Vorratsgefäß oder durch die Variation der Flüssigkeitsmenge oder durch eine Kombination dieser beiden Varianten erfolgt. Dies ergibt sich zwangsläufig daraus, dass im Normalbetrieb, also bei Verbrauch der Flüssigkeit, Gas (z. B. Luft) in das Vorratsgefäß **300** geregelt/gesteuert einströmen muss, um den fallenden Innendruck auszugleichen, im Falle eines Nachfüllens von Flüssigkeit jedoch auch Gas (Luft) ausströmen muss, damit der Innendruck im Vorratsgefäß nicht übermäßig ansteigt.

Weiterhin umfasst die Erfindung ein Verfahren wie vorstehend beschrieben, das sich dadurch auszeichnet, dass die Regulierung oder Steuerung des im wesentlichen konstant gehaltenen Unterdrucks in dem mindestens einen Vorratsgefäß entweder mittels elektronischer Steuerung oder durch eine mechanische Vorrichtung oder durch eine Kombination beider Varianten erfolgt.

Weiterhin umfasst die Erfindung ein Verfahren wie vorstehend beschrieben, das sich dadurch auszeichnet, dass die Messung des Unterdrucks, der in dem mindestens einen Vorratsgefäß im wesentlichen konstant gehalten wird, in der Nähe des Auslaufs und somit üblicherweise in Bodennähe erfolgt.

Weiterhin umfasst die Erfindung ein Verfahren wie vorstehend beschrieben, das sich dadurch auszeichnet, dass der für die Bewässerung verwendeten Flüssigkeit im Bedarfsfalle oder prophylaktisch Düngemittel und/oder systemische Pflanzenschutzmittel in geeigneter Konzentration zugesetzt werden. Dafür geeignete Düngemittel, sogenannte Flüssigdünger, sind dem Fachmann bekannt, ebenso wie systemische Pflanzenschutzmittel, d.h. Pflanzenschutzmittel, die von der Pflanze aufgenommen werden, und daher in der gesamten Pflanze wirken können.

Weiterhin umfasst die Erfindung ein Verfahren wie vorstehend beschrieben, das sich dadurch auszeichnet, dass eine Anpassung des Sollwertes der Tension an den aktuellen Wasserbedarf der Pflanzen erfolgt, wobei die Auswahl des gewünschten Wertes über eine optische Erfassung des Zustandes der Pflanze erfolgt, wobei der dem Zustand der Pflanze entsprechende optimale Wert der Tension entsprechenden Tabellen entnommen wird, oder die Auswahl entsprechend dem aktuellen Datum erfolgt. Das heißt, der Sollwert der Tension kann automatisiert oder manuell je nach Jahreszeit verschieden gewählt werden, so dass z.B. in der Wachstumsphase im Frühjahr/Frühsommer eine stärkere Bewässerung erfolgt. Alternativ oder zusätzlich kann zum Beispiel auch die Größe der Pflanze ermittelt werden, und der Sollwert der Tension in Abhängigkeit von der Pflanzengrö-ße gewählt werden.

Weiterhin umfasst die Erfindung die Verwendung einer Vorrichtung wie vorstehend beschrieben und/oder eines Verfahrens wie vorstehend beschrieben zur Bewässerung und/oder Düngung von Fußballplätzen, Golfplätzen, Ackerland, Weideland oder sonstigen Freilandflächen, auf denen ein bestimmtes Ausmaß an Bewuchs gewünscht ist.

Weiterhin umfasst die Erfindung die Verwendung einer Vorrichtung wie vorstehend beschrieben und/oder eines Verfahrens wie vorstehend beschrieben zur Bewässerung und/oder Düngung von Topfpflanzen. Als Topfpflanzen werden hierbei sämtliche Pflanzen verstanden, die in portablen Pflanzgefäßen gepflanzt sind, wie sie beispielsweise in Gebäuden oder botanischen Gärten im Freiland verwendet werden. Als portabel wird ein Pflanzgefäß angesehen, wenn es sich durch einfaches Anheben mit oder ohne Unterstützung eines Gerätes transportieren läßt.

Weiterhin umfasst die Erfindung die Verwendung einer Vorrichtung wie vorstehend beschrieben und/oder eines Verfahrens wie vorstehend beschrieben zur Bewässerung und/oder Düngung in einem Gewächshaus.

Weiterhin umfasst die Erfindung die Verwendung einer Vorrichtung wie vorstehend beschrieben und/oder eines Verfahrens wie vorstehend beschrieben zur Bewässerung der durchwurzelbaren Substrate Erde, künstliches Substrat für den Anbau von Pflanzen oder Mischung beider durchwurzelbaren Substrate.


**Ausführungsbeispiele**

Die vorliegende Erfindung wird nachfolgend unter Bezugnahme auf die beigefügten Zeichnungen anhand einiger bevorzugter Ausführungsbeispiele näher beschrieben, ohne dass damit eine Einschränkung auf die beschriebenen Ausführungsbeispiele verbunden ist. Die Erfindung dient bevorzugt der Wasserversorgung von Pflanzen, wobei mit dem allgemeinen Begriff "Wasser" keine bestimmte Zusammensetzung verbunden ist, sondern jegliche Art Oberflächen-, Grund- oder Leitungs- bzw. Brauchwasser unabhängig von den Inhaltsstoffen, das geeignet ist für die Bewässerung von Pflanzen, verstanden werden soll. Stellenweise wird daher auch in allgemeinerer Form von "Flüssigkeit" gesprochen, was als synonym mit "Wasser" im vorstehend beschriebenen Sinne anzusehen ist.

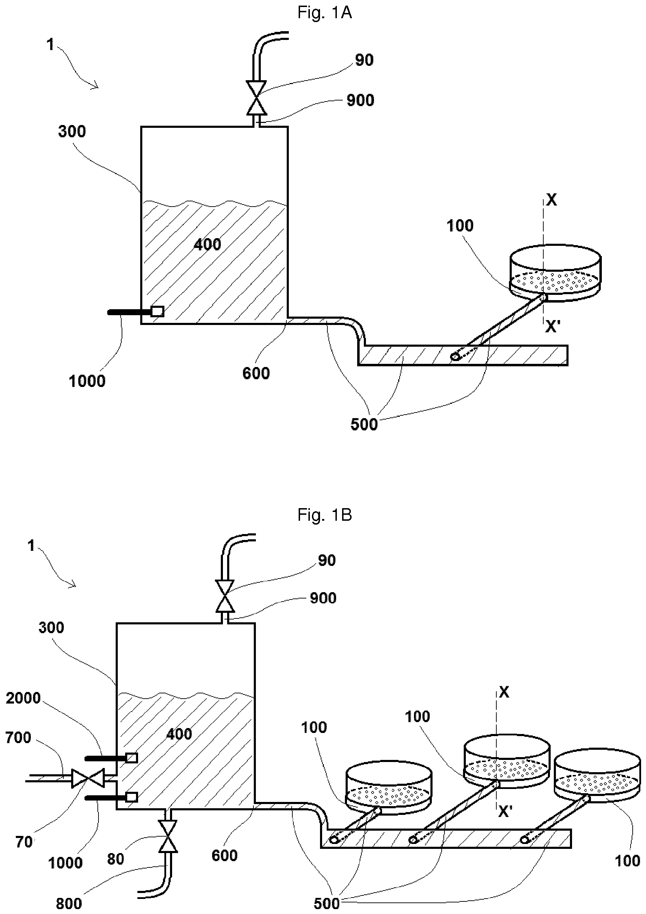

Die erfindungsgemäße Vorrichtung **1** ist in einer wesentlichen Ausführungsform in Fig. 1A und Fig. 2 beispielhaft dargestellt, wobei Fig. 2 eine Schnittansicht entlang der in Fig. 1A eingezeichneten Geraden X-X' durch einen Teilbereich der gesamten Vorrichtung **1** darstellt. In Fig. 1B ist eine weiter bevorzugte Ausführungsform mit mehreren porösen Platten sowie je einer Zu- und Ableitung inkl. Absperrvorrichtungen daran gezeigt.

Die erfindungsgemäße Vorrichtung zur Pflanzenbewässerung **1** umfasst mindestens eine Struktur zur Verteilung von Flüssigkeit **100**, die sich in, an oder zumindest in der Nähe von einem durchwurzelbaren Substrat **200** befindet. Dieses durchwurzelbare Substrat **200** ist der Übersichtlichkeit halber in Fig. 1A/1B nicht dargestellt. Weiterhin weist die Vorrichtung **1** mindestens ein im wesentlichen gasdichtes Vorratsgefäß **300** zur Aufnahme eines Flüssigkeitsvorrates **400** auf, sowie mindestens ein verzweigtes oder unverzweigtes Rohr- und/oder Schlauchleitungssystem **500,** das sich zwischen dem mindestens einen Vorratsgefäß **300** und der mindestens einen Verteilungsstruktur **100** erstreckt. Durch dieses Rohr- und/oder Schlauchleitungssystem **500** gelangt Flüssigkeit **400** aus dem mindestens einen Vorratsgefäß **300** zu der mindestens einen Struktur **100,** und von da aus weiter in das Substrat **200.** Wesentliches Merkmal der Erfindung ist, dass die Zufuhr der Flüssigkeit **400** in das durchwurzelbare Substrat **200** gesteuert oder geregelt wird unter Verwendung der Kapillarkräfte (Tension) im durchwurzelbaren Substrat **200** als Meßgröße und/oder Stellgröße, wobei dieser Wert implizit über die Messung eines Unterdruckes erfolgt, der von den Kapillarkräften im Substrat **200** abhängig ist. Bei diesem Unterdruck handelt es sich um den Unterdruck in dem Vorratsgefäß **300,** der mit dem Sensor **1000** gemessen wird.

Die obengenannte Struktur **100** kann in Form einer porösen oder gelochten Platte aus beliebigem dafür geeigneten Material hergestellt sein, oder aus einem Membranfilter oder einem geeignet perforierten Schlauch oder Rohr bestehen. Wichtig ist, dass der Flüssigkeitsleitwert bzw. Wasserleitwert der Struktur zur Verteilung von Flüssigkeit größer oder mindestens gleich groß ist, wie derjenige des damit in Kontakt befindlichen durchwurzelbaren Substrates **200.** Denn nur dann ist sichergestellt, dass sich zwischen dem Vorratsgefäß **300** über das Leitungssystem **500,** der Verteilungsstruktur **100** und dem durchwurzelbaren Substrat **200** eine ununterbrochene Flüssigkeitssäule erstreckt, die zwingende Voraussetzung dafür ist, dass die Größe der Tension in dem durchwurzelbaren Substrat **200** mit dem Unterdruck im Vorratsgefäß **300** zusammenhängt, d.h. korrespondiert, ähnlich wie dies bei sogenannten kommunizierenden Röhren der Fall ist.

Die Vorrichtung **1** verfügt natürlich ggf. auch erfindungsgemäß über mindestens eine weitere geeignet ausgeführte Öffnung, über die der Flüssigkeitsvorrat ergänzt und/oder ggf. Wartungsarbeiten durchgeführt werden können. Es ist dem Fachmann selbstverständlich bekannt, dass diese mindestens eine weitere Öffnung geeignet wiederverschließbar ist. Der Übersichtlichkeit halber ist diese mindestens eine weitere Öffnung in Fig. 1A/B nicht dargestellt.

Weiterhin weist die Vorrichtung **1,** wie bereits weiter oben angemerkt, in einer Ausführungsform eine Möglichkeit auf, den Unterdruck im Vorratsgefäß **300** zu überwachen, beispielsweise mit Hilfe eines Drucksensors **1000,** der bevorzugt in der Nähe des Auslaufs **600,** das heißt insbesondere im wesentlichen auf gleicher Höhe wie der Auslauf **600** befindlich ist, um den für die Regelung relevanten Kapillardruck möglichst direkt zu erfassen. An den Auslauf **600** ist das Leitungssystem **500** angeschlossen. Natürlich kann sich der Drucksensor **1000** an beliebiger Stelle im Vorratsgefäß **300** befinden, jedoch ist es beispielsweise im Falle, dass er sich oberhalb des Flüssigkeitsvorrates **400** befindet, wo er nur den Unterdruck in der Gasphase über dem Flüssigkeitsvorrat **400** erfassen kann, erforderlich, die Höhe des Flüssigkeitsstandes im Vorratsgefäß **300** auch zu berücksichtigen, um den Kapillardruck im Substrat **200** genauer zu erfassen. Dies erfordert zusätzlichen Aufwand, nichtsdestoweniger ist aber auch diese Ausführungsform vom Umfang der Erfindung mit umfasst.

Die Vorrichtung **1** umfasst weiterhin eine Öffnung **900,** die über die Absperrvorrichtung **90** geöffnet oder geschlossen werden kann, um den gewünschten Unterdruck im Vorratsgefäß **300** einzustellen, d.h. zu steuern oder zu regeln, der erforderlich ist, damit sich im Substrat **200** die gewünschte Kapillarspannung/Tension automatisch, d.h. selbstregulierend, einstellt. Dem Fachmann sind aus dem Stand der Technik zahlreiche geeignete, manuell und/oder elektronisch/elektrisch betätigbare, Absperrvorrichtungen bekannt, die sämtlich verwendet werden können, ohne den Umfang der Erfindung sowie ihrer Äquivalente zu verlassen. Beispielsweise könnte an Stelle eines Ventils (wie in den Abbildungen beispielhaft gezeigt) auch ein Kugelhahn mit Stellmotor verwendet werden, um den erforderlichen Druckausgleich herbeizuführen.

Anstelle oder zusätzlich zur oben erwähnten Öffnung zur Befüllung der Vorrichtung **1** kann sie erfindungsgemäß auch eine Zuleitung **700,** ggf. versehen mit einer Absperrvorrichtung **70,** aufweisen und/oder eine Ableitung **800,** die ggf. mit einer Absperrvorrichtung **80** versehen ist. Auch für die Absperrvorrichtungen **70** und **80** sind dem Fachmann aus dem Stand der Technik zahlreiche geeignete, manuell und/oder elektronisch betätigbare, Absperrvorrichtungen bekannt, die sämtlich verwendet werden können, ohne den Umfang der Erfindung sowie ihrer Äquivalente zu verlassen.

In einer weiteren Ausführungsform kann die erfindungsgemäße Vorrichtung einen Füllstandssensor **2000** enthalten, der es gestattet, den aktuellen Füllstand zu erfassen, so dass es möglich ist, die Vorrichtung **1** je nach Flüssigkeitsverbrauch automatisiert über die Zuleitung **700** nachzufüllen. Hier sowie bezüglich des Drucksensors **1000** sind dem Fachmann aus dem Stand der Technik ebenfalls zahlreiche geeignete, manuell und/oder elektronisch arbeitende Vorrichtungen zur Erfassung des Füllstandes bzw. des Druckes bekannt, die sämtlich verwendet werden können, ohne den Umfang der Erfindung sowie ihrer Äquivalente zu verlassen.

Es ist für die erfindungsgemäße Vorrichtung von besonderem Vorteil, wenn die Messvorrichtungen bzw. Sensoren **1000, 2000** (Drucksensor, Füllstandssensor) mit jeweils mindestens einer der Absperrvorrichtungen **70, 80** und/oder **90** derart verbunden sind, dass die Absperrvorrichtungen **70, 80** und/oder **90** in Abhängigkeit von mindestens einem Messwert mindestens einer der Messvorrichtungen **1000** und/oder **2000** betätigt werden können, um den Unterdruck im Vorratsbehälter **300** zu regeln. Diese mindestens eine Verbindung zwischen mindestens einer Messvorrichtung bzw. mindestens einem Sensor und mindestens einer Absperrvorrichtung ist der Übersichtlichkeit halber in Fig. 1A/B nicht dargestellt. Es ist dem Fachmann ohne weiteres einsichtig, dass

a) die Art der Verbindung zwischen Meßvorrichtung und Absperrvorrichtung beliebiger Art sein kann, also insbesondere elektrischer/elektronischer und/oder mechanischer Art, und
b) die Betätigung der Absperrvorrichtungen **70, 80** und/oder **90** automatisiert und/oder manuell erfolgen kann, wobei die automatisierte Betätigung sowohl mechanisch als auch elektrisch/elektronisch durchgeführt kann,

ohne dadurch den Umfang der Erfindung oder ihrer Äquivalente zu verlassen.

In diesem Zusammenhange fällt es insbesondere ebenfalls in den Umfang der Erfindung, die Vorrichtung und damit die Durchführung des Verfahrens mikroprozessor- oder computergesteuert zu zuausführen. Diese Ausführungsvarianten mit elektronischer Steuerung sind der Übersichtlichkeit halber in Fig. 1A/B ebenfalls nicht dargestellt. Auch die erfindungsgemäßen mechanischen Vorrichtungen zur Betätigung der Absperrvorrichtungen für die Regelung des Unterdrucks sind der Übersichtlichkeit halber in den Figuren nicht dargestellt.

In Fig. 2 ist eine Teilansicht der Vorrichtung gezeigt, und zwar in Form eines Schnittes entlang der Geraden X-X' in Fig. 1A/B. Darin erkennbar ist beispielhaft schematisch die Kontaktierung der Verteilungsstruktur **100,** die über das Leitungssystem **500** mit dem Rest der Vorrichtung **1** verbunden ist, mit dem durchwurzelbaren Substrat **200** anhand einer Verteilungsstruktur **100,** ausgebildet als poröse Platte, dargestellt. Anstelle einer porösen Platte kann das Leitungssystem **500** auch in einem verzweigten oder unverzweigten perforierten Schlauch- und/oder Rohrsystem oder in einem Membranfilter enden, aus dem ebenfalls die Flüssigkeit in dem Maße austreten kann, dass eine ununterbrochene Wassersäule zwischen den untersten Kapillaren des Substrates **200** und dem Flüssigkeitsstand im Vorratsgefäß **300** ausgebildet ist.

Aufbauend auf den wie oben beschrieben durchgeführten Simulationsrechnungen wurden auch Pflanzversuche durchgeführt. In Fig. 6 ist beispielhaft das Ergebnis eines solchen Pflanzversuchs dargestellt. Die Abbildung zeigt den zeitlichen Verlauf der mittels Druckaufnehmer-Tensiometer gemessenen Saugspannung (Tension) im Boden, und zwar in Höhe des sogenannten $A_p$-Horizonts, d.h. auf der Höhe des unteren Randes des mineralischen Oberbodens, der einer regelmäßigen landwirtschaftlichen Bearbeitung ("pflügen") unterliegt. Das durchwurzelbare Substrat in diesem Versuch ist eine Parabraunerde aus Löss, die verwendeten Pflanzen sind Mais. Die vorgegebene Saugspannung beträgt 120 hPa, das Aufzeichnungsintervall sind 5 Minuten, und der Startwert waren 536 hPa. Es ist deutlich zu erkennen, dass die Anwendung des erfindungsgemäßen Verfahrens zur Aufrechterhaltung einer im wesentlichen gleichmäßigen Tension (Saugspannung, Kapillarspannung) im Boden führt.

**Bezugszeichenliste**

| | |
|---|---|
| **1** | Vorrichtung zur Bewässerung von Pflanzen |
| **70** | Absperrvorrichtung für Zuleitung **700** |
| **80** | Absperrvorrichtung für Ableitung **800** |
| **90** | Absperrvorrichtung für Öffnung **900** |
| **100** | Struktur zur Verteilung von Flüssigkeit, kurz "Struktur" oder "Verteilungsstruktur" genannt |
| **200** | Durchwurzelbares Substrat, kurz "Substrat" oder "Substratschüttung" genannt |
| **300** | Vorratsgefäß |
| **400** | Flüssigkeitsvorrat bzw. Flüssigkeit |
| **500** | Verzweigtes oder unverzweigtes Rohr- und/oder Schlauchleitungssystem, kurz "Leitungssystem" genannt. |
| **600** | Auslauf |
| **700** | Zuleitung |
| **800** | Ableitung |
| **900** | Öffnung |
| **1000** | Druckmeßvorrichtung bzw. Drucksensor |
| **2000** | Füllstands-Meßvorrichtung bzw. Füllstandssensor |

**Abbildungslegenden**

| | |
|---|---|
| Fig. 1A | Schematische Darstellung einer Ausführungsform der erfindungsgemäßen Vorrichtung **1.** |
| Fig. 1B | Schematische Darstellung einer weiteren Ausführungsform der erfindungsgemäßen Vorrichtung **1.** |
| Fig. 2 | Schnittzeichnung einer beispielhaften Anordnung einer Struktur zur Verteilung von Flüssigkeit **100** an einem durchwurzelbaren Substrat **200** entlang der Geraden X-X' in Fig. 1A/B. |
| Fig. 3 | Graphische Darstellung der Retentionsfunktion für die Bodenarten Ton, Lehm und Sand mit (exemplarischer) Projektion der für eine relative Wassersättigung von 70 Vol.-% (= 30 Vol-% luftgefüllter Porenraum) einzustellenden, bodenartenabhängigen Tensionen. |
| Fig. 4 | Tab. 1 - Eingangsdaten der Simulation zum Bodenwasserhaushalt unter dem Einfluss einer Wasserentnahme durch die Pflanzenwurzel ohne und mit tensionsgesteuerter Bewässerung. |
| Fig. 5A | Zeitabhängige Tiefenfunktion des Wassergehalts im Substrat ohne Bewässerung. |
| Fig. 5B | Zeitabhängige Tiefenfunktion des Wassergehalts im Substrat mit tensionsgesteuerter Bewässerung. |
| Fig. 5C | Kumulativer Wasserfluss ohne Bewässerung (siehe Fig. 5A). |
| Fig. 5D | Kumulativer Wasserfluss bei tensionsgesteuerter Bewässerung (siehe Fig. 5B). |
| Fig. 6 | Zeitlicher Verlauf der mittels Druckaufnehmer-Tensiometer gemessenen Saugspannung (Tension) im |

Boden ($A_p$-Horizont einer Parabraunerde aus Löss) im Pflanzversuch mit Mais bei einer vorgegebenen Saugspannung von 120 hPa; Aufzeichnungsintervall: 5 Minuten, Startwert: 536 hPa.

Fig. 7    Beispiele für die Berechnung des Lufteintrittswerts für verschiedene Porenweiten anhand der kapillaren Steighöhe. Die mit "*" gekennzeichneten Tensionen sind die für die gegebenen Porendurchmesser bei idealer Benetzung maximalen Werte der einstellbaren Unterdrucke; der Minimum-Wert liegt jeweils bei 0 hPa. Die verwendete Formel lautet:

$$h_m = (4 \cdot \sigma_{1,2}) / (g \cdot \rho_{fl} \cdot 2r) \,,$$

wobei "$h_m$" der erreichten Steighöhe entspricht, "g" die Erdbeschleunigung ist, "r" der Porenradius und "$\rho_{fl}$" die Dichte sowie "$\sigma_{1,2}$" die Oberflächenspannung des flüssigen Mediums (im allgemeinen Wasser) ist.

**Patentansprüche**

1.  Vorrichtung zur Pflanzenbewässerung **(1),** umfassend mindestens eine Struktur zur Verteilung von Flüssigkeit **(100)** für die Bewässerung eines durchwurzelbaren Substrats **(200),** mindestens ein im wesentlichen gasdichtes Vorratsgefäß **(300)** mit einem Auslauf **(600),** geeignet zur Aufnahme eines Flüssigkeitsvorrates **(400)** sowie mindestens eine verzweigte oder unverzweigte Rohr- und/oder Schlauchverbindung **(500)** zwischen dem mindestens einen Vorratsgefäß **(300)** und der mindestens einen Struktur zur Verteilung der Flüssigkeit **(100),** durch die Flüssigkeit **(400)** aus dem mindestens einen Vorratsgefäß **(300)** zu der mindestens einen Struktur zur Verteilung von Flüssigkeit **(100)** gelangen kann, **dadurch gekennzeichnet,**

    **dass** sie mindestens eine im Vorratsgefäß **(300)** befindliche verschließbare Öffnung **(900)** mit mindestens einer Absperrvorrichtung **(90)** für die Öffnung **(900)** aufweist, über die in geeigneter Weise Gasaustausch zwischen dem Inneren des Vorratsgefäßes und der Umgebung im wesentlichen genau dann erfolgen kann, wenn dies erforderlich ist, um den gewünschten Unterdruck im wesentlichen aufrecht zu erhalten, und
    **dass** die mindestens eine Struktur zur Verteilung von Flüssigkeit **(100)** einen Lufteintrittswert zwischen 1 hPa und 1013 hPa, bevorzugt zwischen 50 hPa und 900 hPa, besonders bevorzugt zwischen 100 hPa und 800 hPa aufweist, und sich in dem Vorratsgefäß **(300)** ein Drucksensor **(1000)** befindet, mit dem die Kapillarkräfte des durchwurzelbaren Substrats **(200)** ermittelt werden.

2.  Vorrichtung gemäß Anspruch 1, **dadurch gekennzeichnet, dass** sich der Drucksensor **(1000)** in der Nähe des Auslaufs **(600)** befindet.

3.  Vorrichtung gemäß einem der vorangegangenen Ansprüche, **dadurch gekennzeichnet, dass** es sich bei der mindestens einen Struktur zur Verteilung von Flüssigkeit **(100)** um mindestens eine poröse Platte und/oder mindestens einen Membranfilter und/oder mindestens einen perforierten Schlauch und/oder mindestens ein perforiertes Rohr handelt.

4.  Vorrichtung gemäß einem der vorangegangenen Ansprüche, **dadurch gekennzeichnet, dass** sie mindestens eine Zuleitung **(700)** für die Auffüllung verbrauchter Flüssigkeit **(400)** aufweist und/oder mindestens eine Ableitung **(800)** zum Ablass nicht mehr benötigter Flüssigkeit **(400)** und/oder mindestens eine Absperrvorrichtung **(70)** für die Zuleitung **(700)** und/oder mindestens eine Absperrvorrichtung **(80)** für die Ableitung **(800).**

5.  Verfahren zur Pflanzenbewässerung, durchgeführt mit einer Vorrichtung gemäß einem der Ansprüche 1 bis 4, **dadurch gekennzeichnet, dass** die Zufuhr von Flüssigkeit in ein durchwurzelbares Substrat gesteuert oder geregelt wird, indem der Unterdruck in mindestens einem Vorratsgefäß, das teilweise oder vollständig mit Flüssigkeit befüllbar ist, bei einem Wert im wesentlichen konstant gehalten wird, bei dem sich in dem durchwurzelbaren Substrat infolge mindestens einer hydraulischen Verbindung zwischen dem mindestens einen Vorratsgefäß und dem durchwurzelbaren Substrat eine Kapillarspannung einstellt, die geeignet ist für die Assimilation von Pflanzen und/oder das Keimen von Pflanzensamen, wobei im Falle der Regelung des Unterdruckes die Messung des Unterdruckes mittels eines Sensors **(1000)** erfolgt, im Falle der Steuerung des Unterdruckes die Festlegung des Unterdruckes anhand von Parametern erfolgt, ausgewählt aus der Liste umfassend Art des durchwurzelbaren Substrats **(200),** Temperatur, Datum, Pflanzenart, und sowohl bei Regelung als auch bei Steuerung die Einstellung des Unterdruckes durch wahlweises Betätigen der Absperrvorrichtungen **(70, 80, 90)** erfolgt.

**6.** Verfahren zur Pflanzenbewässerung gemäß Anspruch 5, **dadurch gekennzeichnet, dass** die für die Durchführung des Verfahrens in Abhängigkeit vom Verbrauch der Flüssigkeit erforderliche Variation des Unterdruckes entweder durch die Variation der Gasmenge im Vorratsgefäß oder durch die Variation der Flüssigkeitsmenge oder durch eine Kombination dieser beiden Varianten erfolgt.

**7.** Verfahren zur Pflanzenbewässerung gemäß Anspruch 5, **dadurch gekennzeichnet, dass** die Regulierung oder Steuerung des im wesentlichen konstant gehaltenen Unterdrucks in dem mindestens einen Vorratsgefäß entweder mittels elektronischer Steuerung oder durch eine mechanische Vorrichtung oder durch eine Kombination beider Varianten erfolgt.

**8.** Verfahren zur Pflanzenbewässerung gemäß Anspruch 5, **dadurch gekennzeichnet, dass** die Messung des Unterdrucks, der in dem mindestens einen Vorratsgefäß im wesentlichen konstant gehalten wird, in der Nähe des Auslaufs und somit üblicherweise in Bodennähe erfolgt.

**9.** Verfahren zur Pflanzenbewässerung gemäß Anspruch 5, **dadurch gekennzeichnet, dass** der für die Bewässerung verwendeten Flüssigkeit im Bedarfsfalle oder prophylaktisch Düngemittel und/oder systemische Pflanzenschutzmittel in geeigneter Konzentration zugesetzt werden.

**10.** Verfahren zur Pflanzenbewässerung gemäß Anspruch 5, **dadurch gekennzeichnet, dass** eine Anpassung des Sollwertes der Tension an den aktuellen Wasserbedarf der Pflanzen erfolgt, wobei die Auswahl des gewünschten Wertes über eine optische Erfassung des Zustandes der Pflanze erfolgt, wobei der dem Zustand der Pflanze entsprechende optimale Wert der Tension entsprechenden Tabellen entnommen wird, oder die Auswahl entsprechend dem aktuellen Datum erfolgt.

**11.** Verwendung einer Vorrichtung gemäß den Ansprüchen 1 bis 4 und/oder eines Verfahrens gemäß den Ansprüchen 5 bis 10 zur Bewässerung und/oder Düngung von Fußballplätzen, Golfplätzen, Ackerland, Weideland oder sonstigen Freilandflächen, auf denen ein bestimmtes Ausmaß an Bewuchs gewünscht ist.

**12.** Verwendung einer Vorrichtung gemäß den Ansprüchen 1 bis 4 und/oder eines Verfahrens gemäß den Ansprüchen 5 bis 10 zur Bewässerung und/oder Düngung von Topfpflanzen.

**13.** Verwendung einer Vorrichtung gemäß den Ansprüchen 1 bis 4 und/oder eines Verfahrens gemäß den Ansprüchen 5 bis 10 zur Bewässerung und/oder Düngung in einem Gewächshaus.

**14.** Verwendung einer Vorrichtung gemäß den Ansprüchen 1 bis 4 und/oder eines Verfahrens gemäß den Ansprüchen 5 bis 10 zur Bewässerung der durchwurzelbaren Substrate Erde, künstliches Substrat für den Anbau von Pflanzen oder Mischung beider durchwurzelbaren Substrate.

**Claims**

**1.** Device for plant irrigation (1), comprising at least one structure for distributing liquid (100) for the irrigation of a rootable substrate (200), at least one substantially gas-tight storage vessel (300) with an outlet (600), suitable for receiving a liquid supply (400), as well as at least one branched or unbranched pipe and/or hose connection (500) between the at least one storage vessel (300) and the at least one structure for distributing liquid (100), through which liquid (400) can pass from the at least one storage vessel (300) to the at least one structure for distributing liquid (100), **characterized in that**
it has at least one closable opening (900) located in the storage vessel (300) with at least one shut-off device (90) for the opening (900), via which gas exchange between the interior of the storage vessel and the environment can take place in a suitable manner substantially precisely when this is necessary to substantially maintain the desired negative pressure, and **in that** the at least one structure for distributing liquid (100) has an air inlet value between 1 hPa and 1013 hPa, preferably between 50 hPa and 900 hPa, particularly preferably between 100 hPa and 800 hPa, and a pressure sensor (1000) is located in the reservoir (300) for determining the capillary forces of the rootable substrate (200).

**2.** Device according to claim 1, **characterised in that** the pressure sensor (1000) is located in the vicinity of the outlet (600).

3. Device according to any one of the preceding claims, **characterized in that** said at least one liquid distribution structure (100) is at least one porous plate and/or at least one membrane filter and/or at least one perforated hose and/or at least one perforated pipe.

4. Device according to one of the preceding claims, **characterised in that** it comprises at least one supply line (700) for replenishing used liquid (400) and/or at least one discharge line (800) for discharging liquid (400) which is no longer required and/or at least one shut-off device (70) for the supply line (700) and/or at least one shut-off device (80) for the discharge line (800).

5. A method for plant irrigation carried out with a device according to any one of claims 1 to 4, **characterized in that** the supply of liquid into a rootable substrate is controlled or regulated by keeping the negative pressure in at least one storage vessel, which can be partially or completely filled with liquid, substantially constant at a value at which a capillary tension is established in the rootable substrate as a result of at least one hydraulic connection between the at least one storage vessel and the rootable substrate, which is suitable for the assimilation of plants and/or the germination of plant seeds, wherein in case of regulation of the negative pressure the measurement of the negative pressure is effected by means of a sensor (1000), in case of control of the negative pressure the determination of the negative pressure is effected by means of parameters selected from the list comprising type of rootable substrate (200), temperature, date, type of plant, and in case of regulation as well as in case of control the setting of the negative pressure is effected by selective actuation of the shut-off devices (70, 80, 90).

6. Method for plant irrigation according to claim 5, **characterised in that** the variation of the negative pressure required for carrying out the method as a function of the consumption of the liquid is effected either by varying the quantity of gas in the storage vessel or by varying the quantity of liquid or by a combination of these two variants.

7. Method for plant irrigation according to claim 5, **characterised in that** the regulation or control of the substantially constant negative pressure in the at least one storage vessel is effected either by means of electronic control or by a mechanical device or by a combination of both variants.

8. Method for plant irrigation according to claim 5, **characterised in that** the measurement of the negative pressure, which is kept substantially constant in the at least one storage vessel, takes place in the vicinity of the outlet and thus usually close to the ground.

9. Method for plant irrigation according to claim 5, **characterised in that** in case of need or prophylactically fertilisers and/or systemic plant protection agents are added in suitable concentrations to the liquid used for irrigation.

10. Method for plant irrigation according to claim 5, **characterised in that** an adaptation of the desired value of the tension to the current water requirement of the plants takes place, wherein the selection of the desired value takes place via an optical detection of the condition of the plant, wherein the optimum value of the tension corresponding to the condition of the plant is taken from corresponding tables, or the selection takes place according to the current date.

11. Use of a device according to claims 1 to 4 and/or a method according to claims 5 to 10 for the irrigation and/or fertilisation of football pitches, golf courses, arable land, pasture land or other open land on which a certain degree of vegetation is desired.

12. Use of a device according to claims 1 to 4 and/or a method according to claims 5 to 10 for watering and/or fertilising potted plants.

13. Use of a device according to claims 1 to 4 and/or a method according to claims 5 to 10 for irrigation and/or fertilisation in a greenhouse.

14. Use of a device according to claims 1 to 4 and/or a method according to claims 5 to 10 for irrigating the rootable substrates soil, artificial substrate for growing plants or mixture of both rootable substrates.

**Revendications**

1. Dispositif d'irrigation de plantes (1), comprenant au moins une structure de distribution de liquide (100) pour l'irrigation d'un substrat (200) pouvant être traversé par les racines, au moins un réservoir (300) essentiellement étanche aux gaz et pourvu d'une sortie (600), apte à recevoir une réserve de liquide (400), ainsi qu'au moins un raccord de tube et/ou de tuyau (500) ramifié ou non ramifié entre le au moins un récipient de réserve (300) et la au moins une structure pour la distribution du liquide (100), par lequel le liquide (400) peut passer du au moins un récipient de réserve (300) à la au moins une structure pour la distribution du liquide (100), **caractérisé, en ce qu'**elle comprend au moins une ouverture obturable (900) située dans le récipient de stockage (300), avec au moins un dispositif d'obturation (90) de l'ouverture (900), par l'intermédiaire duquel un échange de gaz peut être effectué de manière appropriée entre l'intérieur du récipient de stockage et l'environnement, essentiellement au moment précis où cela est nécessaire pour maintenir essentiellement la dépression souhaitée, et **en ce que** la au moins une structure de distribution de liquide (100) présente une valeur d'entrée d'air comprise entre 1 hPa et 1013 hPa, de préférence entre 50 hPa et 900 hPa, de manière particulièrement préférée entre 100 hPa et 800 hPa, et un capteur de pression (1000) se trouve dans le récipient de stockage (300), avec lequel les forces capillaires du substrat (200) pouvant être traversé par les racines sont déterminées.

2. Dispositif selon la revendication 1, **caractérisé en ce que** le capteur de pression (1000) est situé à proximité de la sortie (600).

3. Dispositif selon l'une quelconque des revendications précédentes, **caractérisé en ce que** ladite au moins une structure de distribution de liquide (100) est au moins une plaque poreuse et/ou au moins un filtre à membrane et/ou au moins un tuyau perforé et/ou au moins un tube perforé.

4. Dispositif selon l'une des revendications précédentes, **caractérisé en ce qu'**il comporte au moins une conduite d'alimentation (700) pour le remplissage de liquide usagé (400) et/ou au moins une conduite d'évacuation (800) pour l'évacuation du liquide (400) qui n'est plus nécessaire et/ou au moins un dispositif d'arrêt (70) pour la conduite d'alimentation (700) et/ou au moins un dispositif d'arrêt (80) pour la conduite d'évacuation (800).

5. Procédé d'irrigation de plantes, réalisé avec un dispositif selon l'une des revendications 1 à 4, **caractérisé en ce que** l'apport de liquide dans un substrat pouvant être enraciné est commandé ou régulé en maintenant la dépression dans au moins un récipient de stockage, qui peut être partiellement ou entièrement rempli de liquide, sensiblement constante à une valeur à laquelle une tension capillaire s'établit dans le substrat pouvant être enraciné en raison d'au moins une liaison hydraulique entre ledit au moins un récipient de stockage et le substrat pouvant être enraciné, qui convient à l'assimilation de plantes et/ou à la germination de graines de plantes, dans lequel, dans le cas de la régulation de la dépression, la mesure de la dépression s'effectue au moyen d'un capteur (1000), dans le cas de la commande de la dépression, la détermination de la dépression s'effectue à l'aide de paramètres choisis dans la liste comprenant le type de substrat (200) pouvant être enraciné, la température, la date, le type de plante, et aussi bien dans le cas de la régulation que dans le cas de la commande, le réglage de la dépression s'effectue par actionnement sélectif des dispositifs d'arrêt (70, 80, 90).

6. Procédé d'irrigation de plantes selon la revendication 5, **caractérisé en ce que** la variation de la dépression nécessaire à la mise en oeuvre du procédé en fonction de la consommation du liquide est réalisée soit par la variation de la quantité de gaz dans le réservoir, soit par la variation de la quantité de liquide, soit par une combinaison de ces deux variantes.

7. Procédé d'irrigation de plantes selon la revendication 5, **caractérisé en ce que** la régulation ou la commande de la dépression maintenue sensiblement constante dans ledit au moins un réservoir est effectuée soit au moyen d'une commande électronique, soit par un dispositif mécanique, soit par une combinaison des deux variantes.

8. Procédé d'irrigation de plantes selon la revendication 5, **caractérisé en ce que** la mesure de la dépression, qui est maintenue sensiblement constante dans ledit au moins un réservoir, est effectuée à proximité de la sortie et donc habituellement à proximité du sol.

9. Procédé d'irrigation de plantes selon la revendication 5, **caractérisé en ce que** des engrais et/ou des produits phytosanitaires systémiques en concentration appropriée sont ajoutés au liquide utilisé pour l'irrigation en cas de besoin ou à titre prophylactique.

10. Procédé d'irrigation de plantes selon la revendication 5, **caractérisé en ce qu'**une adaptation de la valeur de consigne de la tension aux besoins en eau actuels des plantes est effectuée, la sélection de la valeur souhaitée étant effectuée par une détection optique de l'état de la plante, la valeur optimale de la tension correspondant à l'état de la plante étant prélevée dans des tableaux correspondants, ou la sélection étant effectuée en fonction de la date actuelle.

11. Utilisation d'un dispositif selon les revendications 1 à 4 et/ou d'un procédé selon les revendications 5 à 10 pour l'irrigation et/ou la fertilisation de terrains de football, de terrains de golf, de terres arables, de pâturages ou d'autres surfaces en plein air sur lesquelles un certain degré de végétation est souhaité.

12. Utilisation d'un dispositif selon les revendications 1 à 4 et/ou d'un procédé selon les revendications 5 à 10 pour l'irrigation et/ou la fertilisation de plantes en pot.

13. Utilisation d'un dispositif selon les revendications 1 à 4 et/ou d'un procédé selon les revendications 5 à 10 pour l'irrigation et/ou la fertilisation dans une serre.

14. Utilisation d'un dispositif selon les revendications 1 à 4 et/ou d'un procédé selon les revendications 5 à 10 pour l'irrigation des substrats enracinables terre, substrat artificiel pour la culture de plantes ou mélange des deux substrats enracinables.

Fig. 1A

Fig. 1B

15

Fig. 2

Fig. 3

Fig. 4

Tab. 1

| Parameter | Einheit | ohne Bewässerung | Tensionsgesteuerte Bewässerung |
|---|---|---|---|
| Dauer | d | 60 | |
| Bodentiefe | cm | 20 | |
| Bodenart | - | Lehm | |
| Tiefe Wurzelraum | cm | 18 | |
| Wurzellängendichte | $cm/cm^3$ | 0,1 | |
| Wurzelmodell | - | Feddes | |
| Pflanzenart | - | Mais | |
| pET[1] | cm/d | 1 | |
| LAI[2] | $cm^2/cm^2$ | 1 | |
| $h_{unterer\ Rand}$[3] | hPa | f(t); min -8000 | -80 |
| Fluss$_{unterer\ Rand}$[4] | cm/d | 0 | f(t); max = 1 (pET) |

[1] Potenzielle Evapotranspiration
[2] Blattflächenindex (leaf area index)
[3] Unterdruckrandbedingung bei tensionsgesteuerter Bewässerung
[4] Flussrandbedingung mit Zufluss = 0 bei Ausschluß von Bewässerung

Fig. 5A

Volumetrischer Wassergehalt [cm³/cm³]

Fig. 5B

Volumetrischer Wassergehalt [cm³/cm³]

Fig. 5C

Fig. 5D

Fig. 6

Fig. 7

| Beispiel | Durchmesser 2r [μm] | Durchmesser 2r [m] | Lufteintrittswert [m] | max. Tension[*] [hPa] |
|---|---|---|---|---|
| Glasplatte | 100 | $1,0 \cdot 10^{-4}$ | 0,3 | - 29 |
| Glasplatte | 1,6 | $1,6 \cdot 10^{-6}$ | 18,54 | - 1819 |
| Membranfilter | 0,7 | $7,0 \cdot 10^{-7}$ | 42,38 | - 4157 |
| Membranfilter | 0,45 | $4,5 \cdot 10^{-7}$ | 65,92 | - 6467 |
| Membranfilter | 0,2 | $2,0 \cdot 10^{-7}$ | 148,32 | - 14550 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29912508 U1
- AT 513373 B1
- DE 29721057 U1
- WO 2009024962 A2